# EUROPEAN PATENT SPECIFICATION

(11) **EP 2 338 934 B1**
(45) Date of publication and mention of the grant of the patent: **04.06.2014**
(21) Application number: 10195942.7
(22) Date of filing: 20.12.2010
(51) Int. Cl.: C08K 3/00

(54) **Slurry composition**
Schlammzusammensetzung
Composition de boue

(30) Priority: 23.12.2009 US 289751 P; 30.06.2010 US 827841
(43) Date of publication of application: 29.06.2011
(73) Proprietor: General Electric Company, Schenectady, NY 12345 (US)
(72) Inventor: Manicke, Paul Stephen, Cincinnati, OH 45215 (US); Walker, Bryant Edward, Cincinnati, OH 45215 (US); Ronk, Warren Rosal, Cincinnati, OH 45215 (US)
(74) Representative: Williams, Andrew Richard

(56) References cited:
- EP-A1- 0 933 343
- EP-A1- 1 215 183
- EP-A1- 1 524 253
- EP-A1- 1 748 036
- WO-A1-00/56811
- WO-A1-99/41440
- WO-A1-02/090291
- WO-A2-01/81270
- US-A- 6 024 898

## Description

### CROSS REFERENCE TO RELATED APPLICATIONS

### BACKGROUND OF THE INVENTION

This invention relates generally to precursor slurry compositions for producing ceramic matrix composite (CMC) articles and a sheet molding compound, and more particularly to slurry compositions utilizing fast curing thermosetting resins.

CMC materials generally comprise a ceramic fiber reinforcement material embedded in a ceramic matrix material. The reinforcement material serves as the load-bearing constituent of the CMC in the event of a matrix crack, while the ceramic matrix protects the reinforcement material, maintains the orientation of its fibers, and serves to dissipate loads to the reinforcement material. Of particular interest to high-temperature applications are silicon-based composites, such as silicon carbide (SiC) as the matrix and/or reinforcement material. SiC fibers have been used as a reinforcement material for a variety of ceramic matrix materials, including SiC, TiC, Si3N4, and Al2O3.

One technique for fabricating CMCs involves multiple layers of "prepreg," often in the form of a tape-like structure, comprising the reinforcement material of the desired CMC impregnated with a precursor of the CMC matrix material. Prepregs may comprise a two-dimensional fiber array comprising a single layer of unidirectionally-aligned tows impregnated with a matrix precursor to create a generally two-dimensional laminate. Multiple plies of the resulting prepregs are stacked and debulked to form a laminate preform, a process referred to as "lay-up." The prepregs are typically arranged so that fiber tows of the prepreg layers are oriented transverse (e.g., perpendicular) to each other, providing greater strength in the laminate plane of the preform, corresponding to the principal or load-bearing direction of the final CMC component. Following lay-up, the laminate preform will typically undergo debulking and curing while subjected to applied pressure and an elevated temperature, such as in an autoclave.

The preform may be heated in vacuum or in an inert atmosphere in order to decompose the organic binders, at least one of which pyrolizes during this heat treatment to form a carbon char, and produces a porous preform for melt infiltration. During melt infiltration, molten silicon infiltrates into the porous preform, reacts with the carbon constituent of the matrix to form silicon carbide, and fills the porosity to yield the desired CMC component.

One process is described in U.S. Patents 5,015,540; 5,330,854; and 5,336,550. As described therein, the reinforcing fibers in the preform are coated with a low char yield slurry composition containing polymers that decompose upon heating. The polymers produce little or no char, which means that there is little or no solid material after burnout, resulting in a low strength preform. Thus there is a need for an improved preform with high strength after bum-out.

In order to address the need for a stronger and tougher preform after burnout, U.S. Patent 6,258,737 describes a process for forming a CMC article using a high char yielding resin slurry composition. Although operable, this disclosed process provides an opportunity for process and product improvement, especially for reduced cycle time and minimized solvent-induced defects.

US 6,024,898 relates to processing techniques for manufacturing complex-shaped preforms, and subsequent silicon carbide composites through melt infiltration.

### BRIEF DESCRIPTION OF THE INVENTION

The above-mentioned need or needs may be met by exemplary embodiments which provide resin systems selected for processibility and green strength. The selected resin systems greatly reduce the need for solvents and therefore solvent processing requirements. Exemplary embodiments employ solvents that are readily removed from the system. Exemplary embodiments utilize increased levels of organic binders or other fillers to provide the desired carbon char levels.

One aspect of the invention provides a precursor slurry composition according to claim 1 herein.

Another aspect of the invention provides a sheet molding compound according to claim 6 herein.

### BRIEF DESCRIPTION OF THE DRAWINGS

The subject matter which is regarded as the invention is particularly pointed out and distinctly claimed in the concluding part of the specification. The invention, however, may be best understood by reference to the following description taken in conjunction with the accompanying drawing figures in which:
FIG. 1 is a perspective view of an exemplary CMC component.
FIG. 2 is a flowchart of an exemplary process for forming a CMC article.

### DETAILED DESCRIPTION OF THE INVENTION

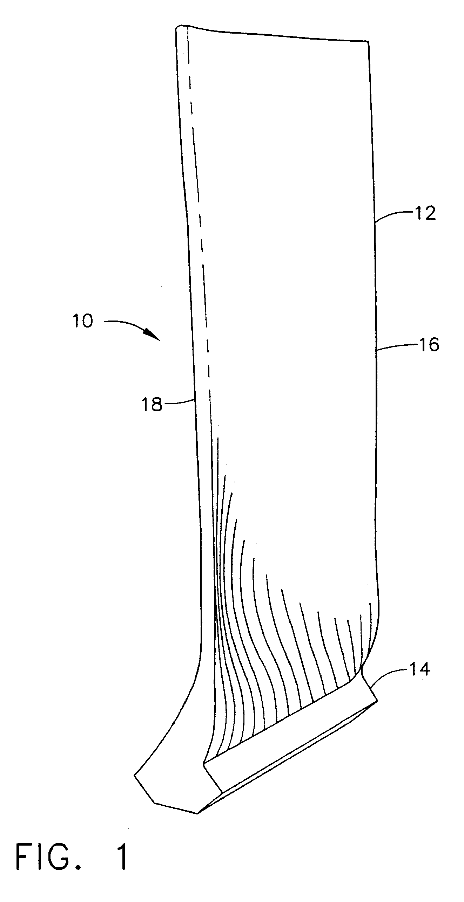

Referring to the drawings, FIG. 1 shows an exemplary ceramic matrix composite component 10 particularly adapted for use in a gas turbine engine assembly. Component 10 includes an airfoil portion 12 against which a flow of gas is directed. The airfoil 10 is mounted to a disk (not shown) by a dovetail 14 that extends downwardly from the airfoil portion 12 and engages a slot of complimentary geometry on the disk. The airfoil has a leading edge section 18 and a trailing edge section 16. Such a composite airfoil is fabricated by laying up a plurality of plies. Those with skill in the art will readily appreciate that embodiments disclosed herein may be widely adapted to produce other ceramic matrix composite components.

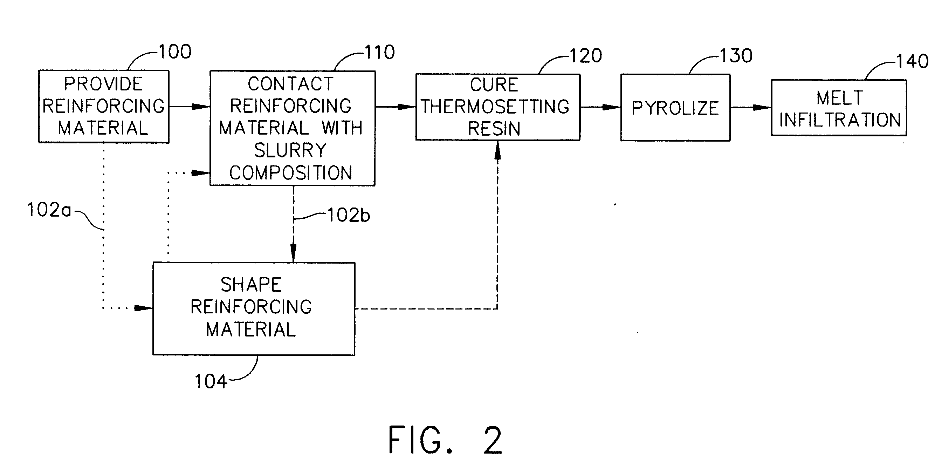

In an exemplary embodiment, composite component 10 may be formed by exemplary processes disclosed herein and schematically represented in FIG. 2. In an exemplary embodiment, reinforcing material such as silicon carbide-containing fibers may be provided (Step 100), for example, as bundled in tows. The reinforcing material may be formed into complex shapes to form the fiber preform which serves as a base for forming the final CMC article. As is known in the art, the fibers may be provided with boron nitride and/or other coating (e.g., silicon-wetting coatings). In an exemplary embodiment, the fibers may be characterized as "continuous lengths" meaning fiber lengths greater than or equal to 1 centimeter. Other exemplary embodiments may provide reinforcing material as non-continuous or chopped fibers. In other exemplary embodiments fiber tows may be directly laid up on tooling, for example in processes known in the art as filament winding.

In an exemplary embodiment, the reinforcing material is contacted with an exemplary slurry composition (Step 110) of the claimed invention. In certain exemplary embodiments, the reinforcing material is contacted with the slurry composition prior to shaping into a preform (Step 104), for example as a prepreg tape or laminate. In other exemplary embodiments, the reinforcing material may be initially shaped (Step 104) and then infused with an exemplary slurry composition. In other words, the reinforcing materials are contacted with an exemplary slurry composition either after being shaped into a preform, as indicated by the dotted line 102a, or before shaping indicated by dashed line 102b.

An exemplary slurry composition includes a fast-cure thermosetting resin system, which, after curing (Step 120), provides a cured preform having desired green strength and toughness. Further, the thermosetting resin system may be selected to require minimal solvent additions that must be removed during cure. The thermosetting resin system may be selected to cure very quickly, as compared to other resin systems currently used in forming CMC components. In an exemplary embodiment, the resin system may cure in 7-10 minutes, with substantially all the solvent, if used, being removed before cure. The reduced solvent provides opportunities for improved dimensional control, especially when forming high tolerance components, e.g., turbine blades and shrouds. An additional advantage of the exemplary thermosetting resin systems is the opportunity to use closed die molding techniques due to more constant volume. The quick cure cycles provides fast turn around times on the molding equipment. Additionally, reduced solvent loads result in lower bulk so that during the shaping/molding process there is reduced opportunities for slips or wrinkles, resulting in improved repeatability.

Exemplary resins within the scope of the claimed invention are polyesters, vinyl esters, epoxy resins, bismaleimide resins, and polyamide resins. An exemplary slurry composition includes a polyester resin, a suitable curing agent (e.g., benzoyl peroxide), a ceramic component (e.g., SiC), and a carbonaceous solids component including organic binders or other fillers. The carbon filler loading is generally higher than a level used in the high char resin systems referenced above in order to achieve a comparable carbon yield. For example, carbon-containing fillers in known high char resin systems may be about 27 volume%, which is outside the scope of the claimed invention. The claimed invention requires a carbonaceous solids component forming between 30 volume% and 70 volume% of the precursor slurry composition. In exemplary embodiments disclosed herein, preforms, prior to cure, may include carbon fillers at levels up to about 60-70 volume% (i.e. within the scope of the claimed invention) by utilizing solvent (e.g., acetone) prior to shaping and removing the solvent prior to cure. Other exemplary embodiments may include the carbonaceous solids component at levels greater than about 30 volume% (i.e. as per the claimed invention). Exemplary carbonaceous material may include graphite particles, flakes, whiskers, or fibers of amorphous, single crystal or poly-crystalline carbon, carbonized plant fibers, lamp lack, finely divided coal, charcoal, and carbonized polymer fibers or felt such as rayon poly-acrylonitrile, and polyacetylene. Ideally, the resin(s) provide adequate flow without requiring significant amount of solvent. "Adequate flow" may be determined by the processing requirements such as the flow required to consolidate the resin system during the cure stage. Other processing methods, such as mixing the slurry to a homogenous mixture or winding into a tape may require lower viscosity than consolidation. Those with skill in the art will appreciate the flow requirements for the desired outcomes. Exemplary embodiments may include acetone or other easily removed solvent. Benzoyl peroxide or other agents may be utilized to initiate polymerization of the resin(s).

Removal of substantially all the solvent, prior to cure, and use of a relatively fast curing thermosetting resin promotes substantially total cure, providing dimensional stability to the preform. The cured preform is pyrolized (Step 130) as is known in the art to yield a porous fiber structure for subsequent processing. Pyrolization yields carbon content for subsequent reaction with molten silicon to form the silicon-silicon carbide composite.

An exemplary melt infiltration process (Step 140) is disclosed in U.S. Patent No. 4,737,328, which is incorporated herein by reference. Sufficient molten silicon infiltrate is infiltrated into the preform to produce the composite component. Specifically, the molten silicon infiltrant is mobile and highly reactive with elemental carbon to form silicon carbide. The period of time required for infiltration may be determined empirically and depends largely on the size of the preform and extent of infiltration required. Thereafter, the resulting infiltrated body is cooled under conditions (atmosphere and cooling rate) to avoid significant deleterious effects. It is envisioned that pyrolization and silicon melt infiltration may be performed in a continuous operation, or in separate operations as understood by those having skill in the art.

The temperature range for melt infiltration may be from about 1400 °C to about 1800 °C, preferably between about 1400 °C and 1450 °C. The preform may be placed on a carbon wick that is supported on a boron-nitride coated graphite plate. Silicon (e.g., as 95% Si-5% B alloy) may be placed on the wick in an amount sufficient to completely saturate the wick and fill the preform when molten.

After cooling, the infiltrated composite body may be removed from the attached carbon wick (largely converted to silicon carbide and silicon) by known techniques such as cutting and grinding with diamond abrasive wheels. Exemplary composite bodies have high density (e.g., not greater than about 3% porosity).

Thus, there is provided a process for quickly forming a porous preform having sufficient residual carbon char and reinforcement material into which molten Si may be infused to form the SiC matrix. However, the process itself does not fall inside the scope of the claimed invention. The porous preform may comprise a near net shape incorporating complex features not readily obtainable by prior methods.

In an alternate embodiment, a sheet molding compound is disclosed. An exemplary sheet molding compound includes reinforcing material of randomly dispersed chopped fibers, for example chopped coated SiC tow bundles typically about 1-5 cm in length, sandwiched between opposing films of the ceramic precursor slurry (i.e., the thermosetting resin system as discussed above). The fast curing thermosetting resin is used to obtain both flow in the mold and green strength after molding but prior to pyrolization. The CMC precursor sheet molding compound can be subsequently processed to suitable green strength, for example, by compression molding. The thicker final form of the CMC sheet molding compound material along with the material's ability to flow and crosslink can reduce CMC component processing time by several hours.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A precursor slurry composition for forming a ceramic matrix composite article (10) **characterized by** a thermosetting resin; a curing agent; a ceramic component; a carbonaceous solids component forming between 30 volume% and 70 volume% of the precursor slurry composition; and a solvent; wherein the thermosetting resin is at least one member selected from a polyester, a vinyl ester, an epoxy resin, a bismaleimide resin, and a polyimide resin, and wherein the carbonaceous solids component provides a suitable amount of carbon char upon pyrolization to thereby form a porous preform for melt infiltration with silicon and reaction therewith to form silicon carbide (SiC), and wherein the precursor slurry composition comprises up to 70 volume% solids after removal of the solvent, and prior to cure.

2. The precursor slurry composition according to claim 1 wherein the selected thermosetting resin is curable in less than 15 minutes.

3. The precursor slurry composition according to either of claims 1 and 2 wherein the carbonaceous solids component includes at least one member of the group consisting of graphite particles, graphite flakes, graphite whiskers, amorphous, single crystal or poly-crystalline carbon, carbonized plant fibers, lamp black, finely divided coal, charcoal, carbonized polymer fibers, and felt.

4. The precursor slurry composition according to any of claims 1, 2 and 3 comprising:
an amount of one or more additives selected from dispersants, thickening agents, crosslinking monomers, low profile additives and pigments.

5. The precursor slurry composition according to any of the claims 1, 2, 3 and 4 comprising:
48 volume% acetone, 16 volume% of the carbonaceous solids component; 9 volume% of the ceramic component, a remainder being the thermosetting resin and the solvent.

6. A sheet molding compound including:
first and second outer films comprising a precursor slurry composition according to any preceding claim; and
randomly dispersed reinforcing material being carried between the first and second outer films.

7. The sheet molding compound according to claim 6 wherein the reinforcing material comprises SiC tow bundles of between 1 to 5 cm in length.

8. The sheet molding compound according to any of the claims 6 and 7 exhibiting a sufficient green strength following a compression molding process.

## Patentansprüche

1. Vorläuferschlickerzusammensetzung zum Bilden eines Keramikmatrixverbundgegenstands (10), **gekennzeichnet durch** ein wärmehärtbares Harz; einen Härter; eine Keramikkomponente; eine kohlenstoffhaltige Feststoffekomponente, die zwischen 30 Volumen-% und 70 Volumen-% der Vorläuferschlickerzusammensetzung bildet; und ein Lösemittel, wobei das wärmehärtbare Harz mindestens ein Element ausgewählt aus einem Polyester, einem Vinylester, einem Epoxidharz, einem Bismaleimidharz und einem Polyimidharz ist, und wobei die kohlenstoffhaltige Feststoffekomponente eine geeignete Menge von Kohlenstoff-Verkohlungskoks nach Pyrolysierung bereitstellt, um **dadurch** eine poröse Vorform zur Schmelzinfiltration mit Silizium und Reaktion mit diesem zu bilden, um Siliziumkarbid (SiC) zu bilden, und wobei die Vorläuferschlickerzusammensetzung bis zu 70 Volumen-% Feststoffe nach Entfernen des Lösemittels und vor dem Härten umfasst.

2. Vorläuferschlickerzusammensetzung gemäß Anspruch 1, bei der das wärmehärtbare Harz in weniger als 15 Minuten härtbar ist.

3. Vorläuferschlickerzusammensetzung gemäß einem der Ansprüche 1 und 2, bei dem die kohlenstoffhaltige Feststoffekomponente mindestens ein Element aus der Gruppe bestehend aus Graphitpartikeln, Graphitschuppen, Graphit-Whiskern, amorphem, einkristallinem oder polykristallinem Kohlenstoff, verkohlten Pflanzenfasern, Flammruß, feinteiliger Kohle, Holzkohle, verkohlten Polymerfasern und Filz umfasst.

4. Vorläuferschlickerzusammensetzung gemäß einem der Ansprüche 1, 2 und 3, umfassend:
eine Menge von einem oder mehreren Additiven, ausgewählt aus Dispersanten, Verdickungsmitteln, vernetzenden Monomeren, Low-Profile-Additiven und Pigmenten.

5. Vorläuferschlickerzusammensetzung gemäß einem der Ansprüche 1, 2, 3 und 4, umfassend:
48 Volumen-% Aceton, 16 Volumen-% der kohlenstoffhaltigen Feststoffekomponente; 9 Volumen-% der keramischen Komponente, einen Rest, der das wärmehärtbare Harz und das Lösemittel ist.

6. Sheet Molding Compound, umfassend:
erste und zweite Außenfolien, die eine Vorläuferschlickerzusammensetzung gemäß einem der vorhergehenden Ansprüche umfassen; und
zufällig dispergierten Verstärkungsstoff, der zwischen den ersten und zweiten Außenfolien getragen ist.

7. Sheet Molding Compound gemäß Anspruch 6, bei der der Verstärkungsstoff SiC-Strangbündel mit einer Länge von zwischen 1 bis 5 cm umfasst.

8. Sheet Molding Compound gemäß einem der Ansprüche 6 und 7, die im Anschluss an ein Formpressverfahren eine geeignete Grünfestigkeit aufweist.

## Revendications

1. Composition de suspension de précurseur pour former un article composite à phase dispersée de céramique (10), **caractérisée par** une résine thermodurcissable ; un agent durcisseur ; un composant de céramique ; un composant de solides carbonés formant entre 30 % en volume et 70 % en volume de la composition de suspension de précurseur ; et un solvant ; dans laquelle la résine thermodurcissable est au moins un élément choisi entre un polyester, un ester vinylique, une résine époxyde, une résine de bismaléimide et une résine de polyimide, dans laquelle le composant de solides carbonés fournit une quantité appropriée de charbon de carbone par pyrolyse pour ainsi former une ébauche poreuse pour infiltration en fusion par du silicium et réaction avec celui-ci pour former du carbure de silicium (SiC) et dans laquelle la composition de suspension de précurseur comprend jusqu'à 70 % en volume de solides après retrait du solvant et avant durcissement.

2. Composition de suspension de précurseur selon la revendication 1, dans laquelle la résine thermodurcissable choisie est durcissable en moins de 15 minutes.

3. Composition de suspension de précurseur selon l'une quelconque des revendications 1 et 2, dans laquelle le composant de solides carbonés comprend au moins un élément du groupe constitué de particules de graphite, de flocons de graphite, de barbes de graphite, de carbone amorphe, monocristallin ou polycristallin, de fibres végétales carbonisées, de noir de lampe, de charbon finement divisé, de charbon de bois, de fibres polymères carbonisées et de feutre.

4. Composition de suspension de précurseur selon l'une quelconque des revendications 1, 2 et 3, comprenant :
une quantité d'un ou plusieurs additifs choisis entre des dispersants, des agents épaississants, des monomères de réticulation, des additifs à faible profil et des pigments.

5. Composition de suspension de précurseur selon l'une quelconque des revendications 1, 2, 3 et 4, comprenant :
48 % en volume d'acétone, 16 % en volume du composant de solides carbonés ; 9 % en volume du composant de céramique, le restant étant formé de la résine thermodurcissable et du solvant.

6. Composé de moulage en feuille, comprenant :
un premier et un second film extérieurs comprenant une composition de suspension de précurseur selon l'une quelconque des revendications précédentes ; et
un matériau de renfort à dispersion aléatoire qui est acheminé entre les premier et second films extérieurs.

7. Composé de moulage en feuille selon la revendication 6, dans lequel le matériau de renfort comprend des faisceaux de filasses de SiC entre 1 et 5 cm de longueur.

8. Composté de moulage en feuille selon l'une quelconque des revendications 6 et 7, présentant une résistance suffisante à l'état vert après un procédé de moulage par compression.
